# EUROPEAN PATENT APPLICATION

(11) **EP 1 918 597 A1**
(43) Date of publication of application: **07.05.2008**
(21) Application number: 06781527.4
(22) Date of filing: 25.07.2006
(51) Int. Cl.: F16C 29/04, F16C 29/06, F16C 33/32, F16C 33/34, F16C 33/62, F16H 25/20, F16H 25/22, F16H 25/24

(54) **MOVEMENT GUIDING DEVICE**

(30) Priority: 25.08.2005 JP 2005245020
(71) Applicant: THK CO., LTD., Shinagawa-ku, Tokyo 141-0031 (JP)
(72) Inventor: SHIRAI, Takeki, Tikyo 141-0031 (JP); SHIMOTSUCHI, Takayoshi, Tokyo 141-0031 (JP); YAMAMOTO, Hiroshi, Tokyo 141-0031 (JP)
(74) Representative: Grünecker, Kinkeldey, Stockmair & Schwanhäusser Anwaltssozietät
(86) International application number: PCT/JP2006/314615
(87) International publication number: WO 2007/023634

(57) **Abstract**

A linear guide device 40 as a motion guide apparatus has a track rail 41 as a track member and a mobile block 43 as a mobile member slidably mounted on the track rail 41 through many balls 42 ... provided as rolling members. The track rail 41, the mobile block 43, the balls 42 and other members constituting the linear guide device 40 are formed from X-ray permeable material. Preferably, the X-ray permeable material having a linear absorption coefficient of 0.18 cm⁻¹ or less is used. It is desirable that ceramic coating is applied to areas including rolling members rolling surfaces of the track rail 41 and the mobile block 43 loaded by the balls 42. Use of such a configuration provides an X-ray permeable motion guide apparatus capable of being suitably used without installation restrictions even under a special environment.

## Description

### TECHNICAL FIELD

The present invention relates to motion guide apparatuses and, in particular, to an X-ray permeable motion guide apparatus having constitutional members made of X-ray permeable material.

### BACKGROUND ART

In motion guide apparatuses such as a linear guide, a linear guiding apparatus, a ball spline apparatus and a ball screw device, conventionally, constitutional members thereof have generally used a metallic material with high rigidity, such as high-carbon chrome bearing steel, stainless steel or case hardening steel since the members roll and slide repeatedly.

On the other hand, request of an increase in an applicable scope of a recent motion guide apparatus needs commercialization of a motion guide apparatus capable of being used even under a special environment. For example, in the medical field, a state of the interior human body has been made visible using X-rays. A machine or an instrument handling such X-rays requires use of the motion guide apparatus for exact positioning of a person to be inspected.

### DISCLOSURE OF THE INVENTION

### PROBLEMS TO BE SOLVED BY THE INVENTION

However, the conventional motion guide apparatus is formed from a metallic material which will not permeate X-rays from the need of endurance to rolling or sliding operation. This causes the following problem: a machine or an instrument handling X-rays will have a restriction on an installation position. For example, positioning of the motion guide apparatus between an X-ray source and an X-ray film would interfere with radiography of a person to be inspected. Accordingly, the conventional motion guide apparatus needs to be installed at a position out of an X-ray permeable range. Such a restriction on installation will cause an increase in manufacturing cost of a machine or an instrument and significantly degraded usability.

In view of foregoing problems, it is an object of the present invention to provide an X-ray permeable motion guide apparatus capable of being suitably used without restrictions on installation even under a special environment by employing X-ray permeable material as constitutional members of the motion guide apparatus.

### MEANS FOR SOLVING THE PROBLEMS

A motion guide apparatus according to the present invention comprising a track member and a mobile member installed on the track member through a plurality of rolling members so as to reciprocate or rotate in an axial or circumferential direction of the track member is characterized by at least any one of the track member, the mobile member and the plurality of rolling members is made of X-ray permeable material.

In the motion guide apparatus according to the present invention, the X-ray permeable material may have a linear absorption coefficient of 0.18 cm⁻¹ or less.

Moreover, in the motion guide apparatus according to the present invention, ceramic coating may be applied to at least areas including rolling members rolling surfaces of the track member and the mobile member loaded by the plurality of rolling members.

In addition, in the motion guide apparatus according to the present invention, at least fiber reinforced plastics (FRP) may be included in the X-ray permeable material.

In the motion guide apparatus according to the present invention, at least a vicinity of the rolling members rolling surface of the track member or the mobile member loaded by the plurality of rolling members may be formed from the fiber reinforced plastics (FRP).

In another motion guide apparatus according to the present invention, at least a vicinity of the rolling members rolling surface of the track member or the mobile member loaded by the plurality of rolling members may be formed from other material than the fiber reinforced plastics (FRP).

In yet another motion guide apparatus according to the present invention, the track member and the mobile member may be formed from X-ray permeable material made of fiber reinforced plastics (FRP), and the plurality of rolling members may be formed from X-ray permeable material made of synthetic resin.

In yet another motion guide apparatus according to the present invention, the synthetic resin may be at least any one of polycarbonate (PC), polypropylene (PP), acrylic resin (PMMA), polyoxymethylene (POM), polyethylene (PE), polyether ether ketone (PEEK (registered trademark)), poly tetrafluoro ethylene resin (PTFE), polyvinylidene fluoride (PVDF), polyamide (PA), polyimide (PI), polyethylene terephthalate (PET) and polyethersulphone (PES).

In the motion guide apparatus according to the present invention, the fiber reinforced plastic (FRP) may be at least any one of carbon fiber reinforced plastic (CFRP), glass fiber reinforced plastic (GERP) and Kevlar fiber reinforced plastic (KFRP).

Further, in the motion guide apparatus according to the present invention, the track member or the mobile member can have a connecting means for connecting with a base or an object to be guided and the connecting means may be a screw hole formed by fitting a helisert, an enzard or an insert made of X-ray permeable material.

Another motion guide apparatus according to the present invention, comprising a screw shaft formed with a spiral screw groove on an outer-periphery surface thereof and a nut member formed with a spiral nut groove corresponding to the screw groove on an inner-periphery surface and in which the nut member is configured to serve as a sliding screw device relatively reciprocating to the screw shaft by relative rotational movement of the screw shaft to the nut member is characterized by the screw shaft is formed from X-ray permeable material made of polyoxymethylene (POM) or carbon fiber reinforced plastic (CFRP) and the nut member is formed from X-ray permeable material made of monomer cast nylon (MC nylon) or polyoxymethylene (POM).

In another motion guide apparatus according to the present invention, the X-ray permeable material may have a linear absorption coefficient of 0.18 cm⁻¹ or less.

Moreover, in another motion guide apparatus according to the present invention, sliding surfaces of the screw shaft and the nut member may have ceramic coating, respectively.

Further, in another motion guide apparatus according to the present invention, the polyoxymethylene (POM) contain lubricating oil.

A brief summary of the present invention described above has not described all features necessary for the present invention, but a sub combination of these feature groups will belong to the invention.

### EFFECTS OF THE INVENTION

The motion guide apparatus according to the present invention is formed from X-ray permeable material and, for example, in medical equipment for performing X-ray photography, can be used suitably without interfering with X-ray photography. In other words, the present invention can provide an X-ray permeable motion guide apparatus capable of being used suitably without installation restrictions even under a special environment.

### BRIEF DESCRIPTION OF THE DRAWINGS

FIG. 1 is a view illustrating a relationship between image density parameter and linear absorption coefficient.
FIG. 2A is an external perspective view illustrating one embodiment of a linear guide device according to the present embodiment formed from X-ray permeable material.
FIG. 2B is a cross-sectional view for describing an endless circulation path provided in a linear guide device illustrated in FIG. 2A.
FIG. 3 is a view illustrating a configuration which uses the motion guide apparatus according to the present embodiment as a ball screw device.
FIG. 4 is a view illustrating a configuration which uses the motion guide apparatus according to the present embodiment as a spline device.
FIG. 5A is a partially longitudinal perspective view illustrating one embodiment having a configuration which uses the motion guide apparatus according to the present embodiment as a rotation bearing device.
FIG. 5B is a view illustrating a longitudinal section of a rotation bearing device illustrated in FIG. 5A.
FIG. 6 is an external perspective view illustrating one embodiment having a configuration which uses the motion guide apparatus according to the present embodiment as a sliding screw device.
FIG. 7 is a view for describing various applications of the present invention and an external perspective partial sectional view illustrating a motion guide apparatus of an integrated type having a combination of a linear motion guide and a ball screw.

### REFERENCE NUMERALS

40 linear guide device, 41 track rail, 41 a rolling members rolling surface, 42 ball, 43 mobile block, 43a load rolling members rolling surface, 48, 49 screw hole, 52 load rolling path, 53 no-load rolling path, 55 direction change path, 56 ball screw device, 57 screw shaft, 57a rolling members rolling groove, 58 ball, 59 nut member, 60 spline device, 61 spline shaft, 61a rolling members rolling surface, 62 ball, 63 outer casing, 64 retainer, 70 rotation bearing device, 71 inner ring, 72 inner track surface, 73 outer ring, 74 outer track surface, 75 track path, 77 rolling member, 80 sliding screw device, 81 screw shaft, 83 nut member, 90 motion guide apparatus, 91 screw shaft, 93 mobile block, 95 ball.

### BEST MODE FOR CARRYING OUT THE INVENTION

### [Selection of X-ray Permeable Material]

To select X-ray permeable material capable of being used as a constitutional member for the motion guide apparatus through which X-rays pass, first, inventors made the following experiment using an X-ray inspection apparatus: The X-ray inspection apparatus used is an X-ray inspection apparatus (model: SMX-130ET) manufactured by Shimadzu Corporation. Test conditions are: a distance between a radiation source and a camera is 500 mm, and a tube voltage and a tube current are 120 kV and 100 µA respectively, assuming conditions taken for general surgical operation.

A detailed test procedure is as follows:
(1) Irradiate a contrast meter (made of aluminum; a step-wise block having thicknesses of 8 grades of 2 to 9 mm) with X-rays and fetch images in the each thickness.
(2) Apply X-rays to an arbitrary position of the motion guide apparatus formed from various types of material and fetch images.
(3) Using an image processing software, quantify the density of fetched images (quantify density into 256 grades, taking black as zero and white as 255).
(4) Derive a relational formula of a parameter of density corresponding to thickness and a linear absorption coefficient in the each thickness using images of a contrast meter, taking a linear absorption coefficient of aluminum as 0.43 cm⁻¹ (tube voltage: 120 kV).
(5) Using the formula obtained from (4) described above, convert density parameters of the fetched X-ray images into linear absorption coefficients, respectively.

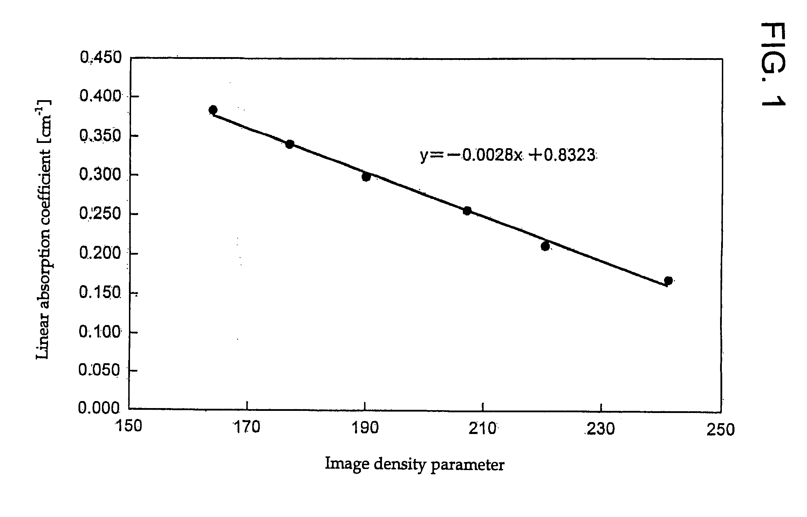

As a thickness of the contrast meter, a density parameter of an X-ray image and a linear absorption coefficient, values in TABLE 1 were used. FIG. 1 illustrates a relational formula of density parameters and linear absorption coefficients in each thickness. FIG. 1 illustrates a relationship between image density parameters and linear absorption coefficients. Using an approximate curve illustrated in FIG. 1, the density parameters of fetched X-ray images have been converted into linear absorption coefficients. [Table 1]

**Table 1 Density parameter of contrast meter**

| Thickness [mm] | Image density parameter | Linear absorption coefficient [cm⁻¹] |
|---|---|---|
| 9.0 | 164 | 0.383 |
| 8.0 | 177 | 0.340 |
| 7.0 | 190 | 0.298 |
| 6.0 | 207 | 0.255 |
| 5.0 | 220 | 0.213 |
| 4.0 | 241 | 0.170 |
| 3.0 | 254 | 0.128 |

By making an experiment under the conditions described above, the inventors obtained the following knowledge. Specifically, observation of an X-ray image of the motion guide apparatus radiographed at a tube voltage of 120 kV indicates that X-rays completely pass through constitutional members if a linear absorption coefficient is 0.16 cm⁻¹ or less and a faint shade remains at a linear absorption coefficient of approx. 0.18 cm⁻¹. Observation from the partial viewpoint indicates that, for example, a linear guide device permits X-rays to suitably pass through an inner bottom surface of an outer rail or a relatively thin portion. In general medical equipment using X-rays, X-ray tube voltage is 120 to 150 kV. In this experiment, a tube voltage of 120 kV was set, which was rather low in medical equipment. Accordingly, X-ray permeable material which constitutes an X-ray permeable motion guide apparatus permits X-rays to sufficiently pass through if a linear absorption coefficient thereof is 0.18 cm⁻¹ or less, and is optimum to medical equipment. In addition, it has become obvious that it is more preferable to use an X-ray permeable material having a linear absorption coefficient of 0.16 cm⁻¹ or less under an environment which requires complete X-ray permeation.

Inventors' experiment has demonstrated that X-ray permeable material satisfying a linear absorption coefficient of 0.18 cm⁻¹ or less is, preferably, fiber reinforced plastics (FRP) or monomer cast nylon (MC nylon), or synthetic resin such as polycarbonate (PC), polypropylene (PP), acrylic resin (PMMA), polyoxymethylene (POM), polyethylene (PE), polyether ether ketone (PEEK (registered trademark)), poly tetrafluoro ethylene (PTFE), polyvinylidene fluoride (PVDF), polyamide (PA), polyimide (PI), polyethylene terephthalate (PET) or polyethersulphone (PES). As the types of the fiber reinforced plastics (FRP), carbon fiber reinforced plastics (CFRP), glass fiber reinforced plastics (GFRP) or Kevlar fiber reinforced plastics (KFRP) can be used. Accordingly, single or combined use of X-ray permeable material provides a motion guide apparatus which suitably permits permeation of X-rays.

Referring next to drawings, description will be made on detailed embodiments of the motion guide apparatus using X-ray permeable material. The embodiments of the motion guide apparatus exemplified below do not restrict inventions according to each claim, and all combinations of the features described in the present embodiment are not always essential for resolutions to inventions. Moreover, the "motion guide apparatus" described herein includes any of all rolling or sliding motion devices, such as ordinary antifriction bearings used in a machine tool or the like, oil-free bearings used in a vacuum, a linear guide, a linear guiding apparatus, a ball spline device, a ball screw apparatus, a roller screw apparatus or a cross roller ring.

### [Application to Linear Guide Device]

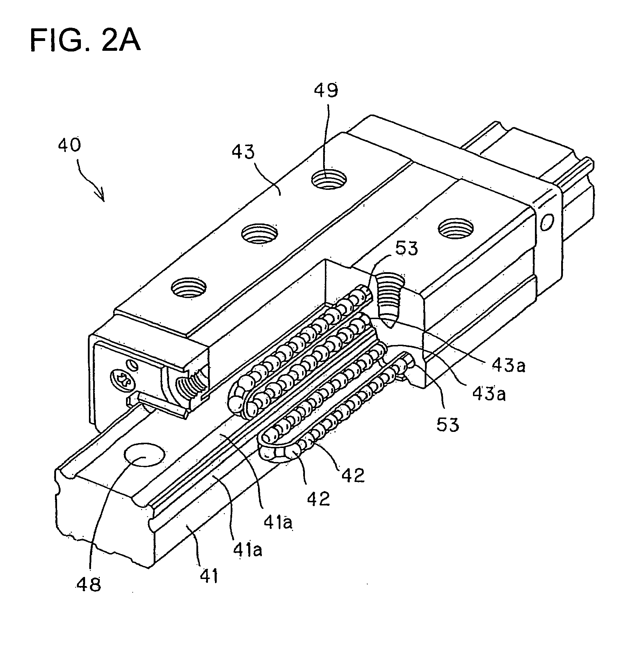

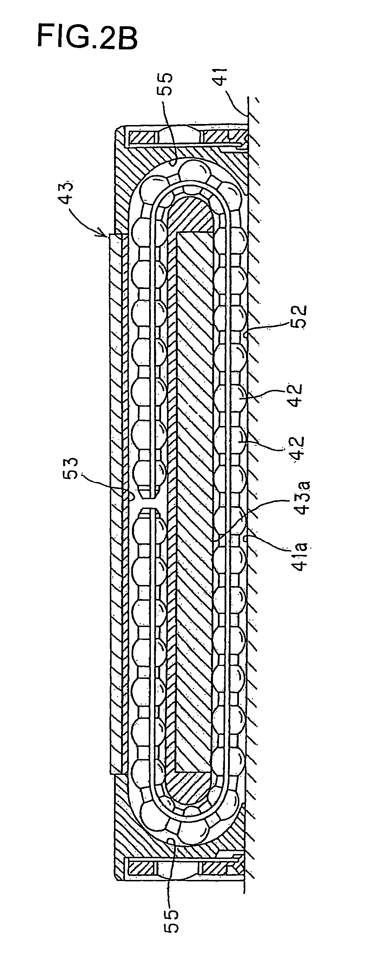

The motion guide apparatus according to the present embodiment can be constructed as a linear guide device as illustrated in FIGS. 2A and 2B, and formation of the linear guide device from the X-ray permeable material described above can provide a motion guide apparatus which permits permeation of X-rays. FIG. 2A is an external perspective view illustrating one embodiment of a linear guide device according to the present embodiment formed from X-ray permeable material. FIG. 2B is a cross-sectional view for describing an endless circulation path provided in the linear guide device illustrated in FIG. 2A.

First, description will be made on a configuration of a linear guide device 40 illustrated in FIGS. 2A and 2B. The linear guide device 40 as the motion guide apparatus according to the present embodiment has a track rail 41 as a track member and a mobile block 43 as a mobile member slidably mounted on the track rail 41 through many balls 42 ... provided as rolling members. The track rail 41 is a long member of which cross section orthogonal to a lengthwise direction is formed in an approximately rectangular manner, and a surface thereof (top surface and both side surfaces) is formed with rolling members rolling surfaces 41a ... as tracks for rolling of the ball over the whole length of the track rail 41.

The track rail 41 may be formed so as to extend linearly or curvedly. The number of the rolling members rolling surfaces 41a ... illustrated in FIGS. 2A and 2B is two each on the right and left, that is, four in all, however, can be changed arbitrarily depending upon applications of the linear guide device 40.

On the other hand, the mobile block 43 has load rolling members rolling surfaces 43a ... at positions corresponding to rolling members rolling surfaces 41a ... respectively. Load rolling paths 52 ... are formed from the rolling members rolling surfaces 41 a ... of the track rail 41 and load rolling members rolling surfaces 43a of the mobile block 43, and a plurality of balls 42 ... are sandwiched therebetween. Further, the mobile block 43 has four no-load rolling paths 53 ... extending in parallel to the respective rolling members rolling surfaces 41a ..., and direction change paths 55 ... connecting the respective no-load rolling paths 53 ... with the respective load rolling paths 52 ... One endless circulation path is formed from a combination of the one load rolling path 52 and the no-load rolling path 53, and a pair of direction change paths 55 connecting them (see FIG. 2B).

The plurality of balls 42 ... is fitted so as to make an endless circulation on an endless circulation path formed from the load rolling path 52 and the no-load rolling path 53, and a pair of direction change paths 55, 55, whereby the mobile block 43 can be reciprocated relatively to the track rail 41.

In the linear guide device 40 according to the present embodiment having the configuration described above, at least any one of the track rail 41 as a track member, the mobile block 43 as a mobile member and the plurality of balls 42 ... fitted as rolling members may be formed from X-ray permeable material made of the above-described fiber reinforced plastics (FRP), monomer cast nylon (MC nylon) or synthetic resin.

In the linear guide device 40 according to the present embodiment, all constitutional members may be formed from X-ray permeable material, and a part of the constitutional members may be formed from X-ray permeable material. It is sufficient to make this selection, depending upon a use environment of the linear guide device 40. Specifically, in use for medical equipment performing X-ray radiography, all constitutional members are formed from X-ray permeable material. In use for an environment which partially permits permeation of X-rays, for example, only the balls 42 ... may be formed from ceramics which permits no permeation of X-rays (not synthetic resin which permits permeation of X-rays), and other members may be formed from X-rays permeable material. Moreover, for example, steel tape which permits no permeation of X-rays is applied to only the rolling members rolling surface and other members may be formed from X-ray permeable material. Use of such steel tape can improve device's service life although the permeability of X-rays is degraded.

Next, description will be made on applications of various types of X-ray permeable material in the constitutional members of the linear guide device 40. For the applications described below, a linear guide device 40 where all constitutional members are formed from X-ray permeable material is assumed.

As the applications of the various types of X-ray permeable material in the constitutional members of the linear guide device 40, first, at least vicinity portions of the rolling members rolling surfaces 41 a ... and the load rolling members rolling surfaces 43a ... as the rolling members rolling surfaces of the track rail 41 or the mobile block 43 loaded by the balls 42 ... may be formed from CFRP and other members may be formed from synthetic resin or the like. The reason why such a configuration is used is that the CFRP is markedly excellent in strength and a change in the layering direction or the number of layers of carbon fiber provides high strength for a desired shape and weight reduction. Accordingly, the CFRP is a suitable material as constitutional members of the load rolling paths 52 ... of the linear guide device 40 according to the present embodiment.

In addition, as another form, at least a vicinity portion of the rolling members rolling surface (e.g. the rolling members rolling surfaces 41a ... and load rolling members rolling surfaces 43a forming the load rolling paths 52 ...) of the track rail 41 or the mobile block 43 loaded by the balls 42 ... may be formed from the material other than fiber reinforced plastics (FRP).

In addition, it is also suitable that the track rail 41 and the mobile block 43 are formed from X-ray permeable material made of fiber reinforced plastic (FRP) and the plurality of balls 42 ... are formed from X-ray permeable material made of synthetic resin (e.g. polyamide (PA) and the like). In view of a use environment and operational frequency and the material compatibility in use for medical equipment, a combination of fiber reinforced plastics (FRP) with polyamide (PA) is very suitable.

For a combination of various types of existing X-ray permeable material, it is sufficient that suitable types of materials are combined in view of a use environment and operational frequency and applications so as to realize a more suitable linear guide device 40.

For an area including the rolling members rolling surface (the rolling members rolling surfaces 41a ... and load rolling members rolling surfaces 43a forming the load rolling paths 52 ..., etc.) of the track rail 41 or the mobile block 43 loaded by the balls 42 ..., it is also suitable to apply ceramic coating. Protection and reinforcement of the rolling members rolling surfaces subjected to repeated rolling and sliding pressure from the plurality of balls 42 with ceramic coating provides the linear guide device 40 with long service life.

Additionally, the track rail 41 and the mobile block 43 have a connecting means for connecting with a base and an object to be guided. The connecting means, for example, as illustrated in FIG. 2A, are a screw hole 48 for screwing the track rail 41 with the base by a bolt (not illustrated) and a screw hole 49 for screwing the mobile block 43 with an object to be guided by a bolt (not illustrated). These screw holes 48, 49 may be formed directly into X-ray permeable material, however, the X-ray permeable material includes difficult-to-process material and further for high dimensional precision and reinforced strength of the connecting means, it is suitable to provide a helisert, an enzard or an insert formed from X-ray permeable material. Use of such a configuration provides an X-ray permeable linear guide device 40 capable of exhibiting the same function as for a configuration formed from metallic material.

### [Application to Roller Screw Device]

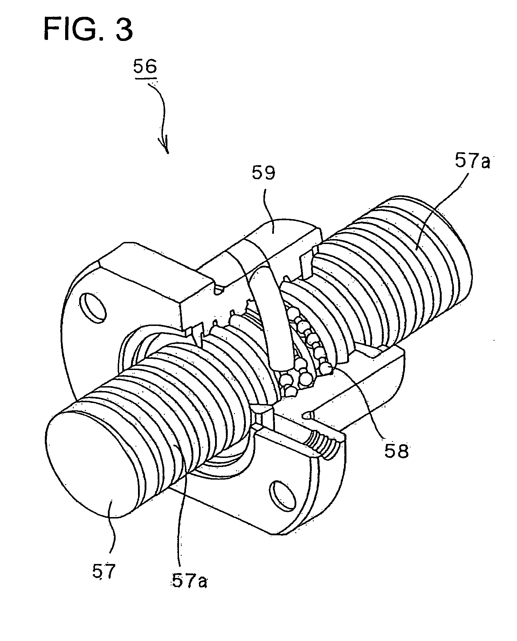

Further, the motion guide apparatus according to the present embodiment can be configured, for example, as a ball screw device 56 as illustrated in FIG. 3. FIG. 3 is a view illustrating a case where the motion guide apparatus according to the present embodiment is configured as a ball screw device. The ball screw device 56 has a screw shaft 57 as a track member and a nut member 59 as a mobile member mounted on the screw shaft 57 so as to make a relative rotation through a plurality of balls 58.

The screw shaft 57 is a member formed with a spiral rolling members rolling groove 57a on an outer-periphery surface thereof. On the other hand, the nut member 59 is a member formed with a spiral load rolling groove corresponding to the rolling members rolling groove 57a on an inner-periphery surface. Moreover, the nut member 59 reciprocates relatively to the screw shaft 57, with relative rotational movement to the nut member 59 of the screw shaft 57.

In addition, the screw shaft 57, the nut member 59, the balls 58 and other members constituting the ball screw device 56 may be formed from X-ray permeable material. Such a configuration of the ball screw device 56 provides a ball screw device 56 capable of being suitably used without interfering with X-ray radiography, for example, in medical equipment performing X-ray radiography.

### [Application to Spline Device]

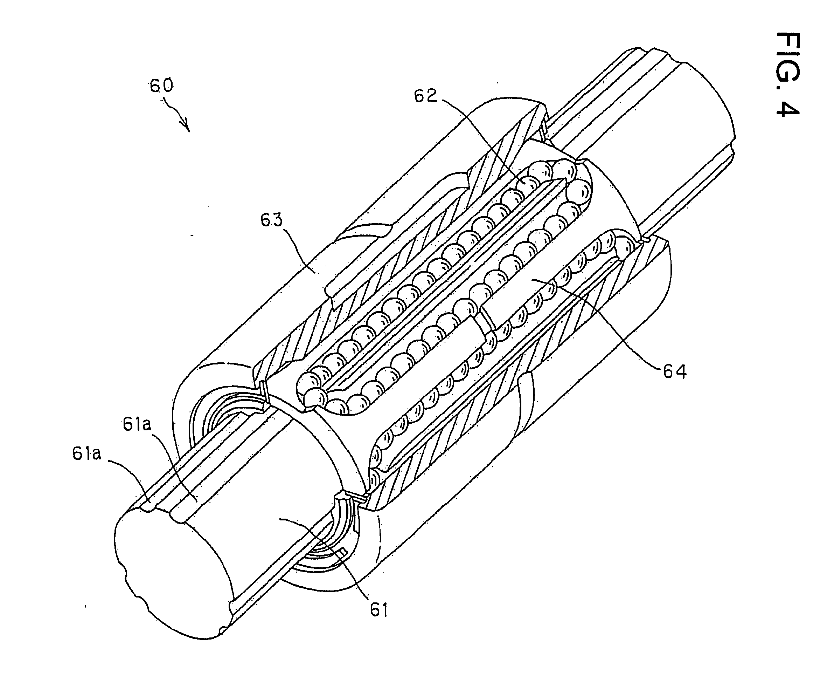

Furthermore, the motion guide apparatus according to the present embodiment can be configured, for example, as the spline device 60 as illustrated in FIG. 4. FIG. 4 is a view illustrating a case where the motion guide apparatus according to the present embodiment is configured as a spline device.

Now, brief description will be made on a configuration of the spline device 60 illustrated in FIG. 4. The spline device 60 has a spline shaft 61 as a track member and a cylindrical outer casing 63 movably mounted on the spline shaft 61 through many balls 62 ... as rolling members. On a surface of the spline shaft 61, there is formed rolling members rolling surfaces 61a ... being tracks for the ball 62 extending in an axial direction of the spline shaft 21. The outer casing 63 mounted on the spline shaft 61 is formed with load rolling members rolling surfaces corresponding to the rolling members rolling surfaces 61a. The each load rolling members rolling surface is formed with a plurality of protrusions extending in such a direction that the rolling members rolling surfaces 61a ... extend. A load rolling path is formed between the load rolling members rolling surface formed on the outer casing 63 and the rolling members rolling surface 61a formed on the spline shaft 61. Adjacent to the load rolling path, there is formed a no-load return path for the balls 62 ... released from load to move. A retainer 64 for aligning and retaining the plurality of balls 62 ... in a circuit manner is assembled into the outer casing 63. Moreover, the plurality of balls 62 ... are rollably positioned between the load rolling members rolling surface of the outer casing 63 and the rolling members rolling surface 61 a of the spline shaft 61 and are provided so as to make an endless circulation through the no-load return path, thus permitting the outer casing 63 to reciprocate relatively to the spline shaft 61.

In the case of the spline device 60 illustrated in FIG. 4 as well, the spline shaft 61, the outer casing 63, the balls 62 and other members constituting the spline device 60 may be formed from X-ray permeable material. Such a configuration of the spline device 60 provides a spline device 60 capable of being suitably used without interfering with X-ray radiography, for example, in medical equipment performing X-ray radiography.

### [Application to Rotation Bearing Device]

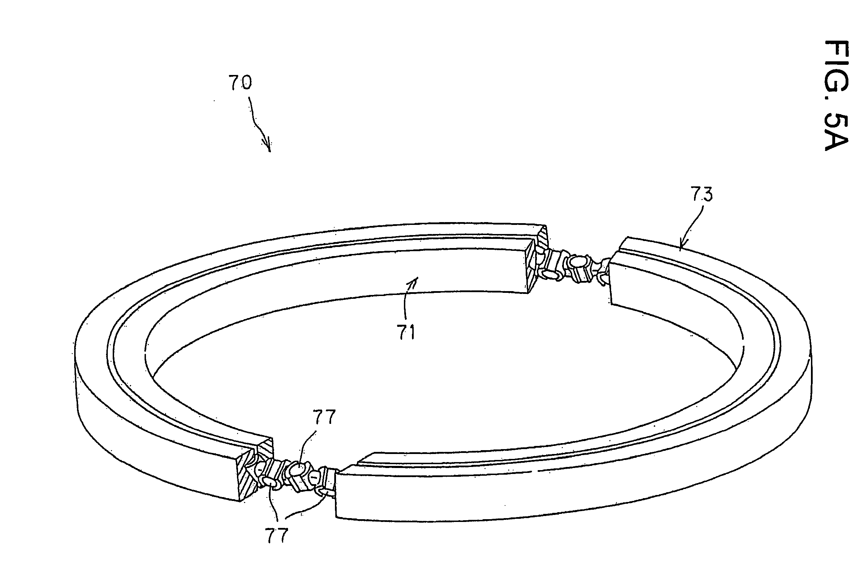

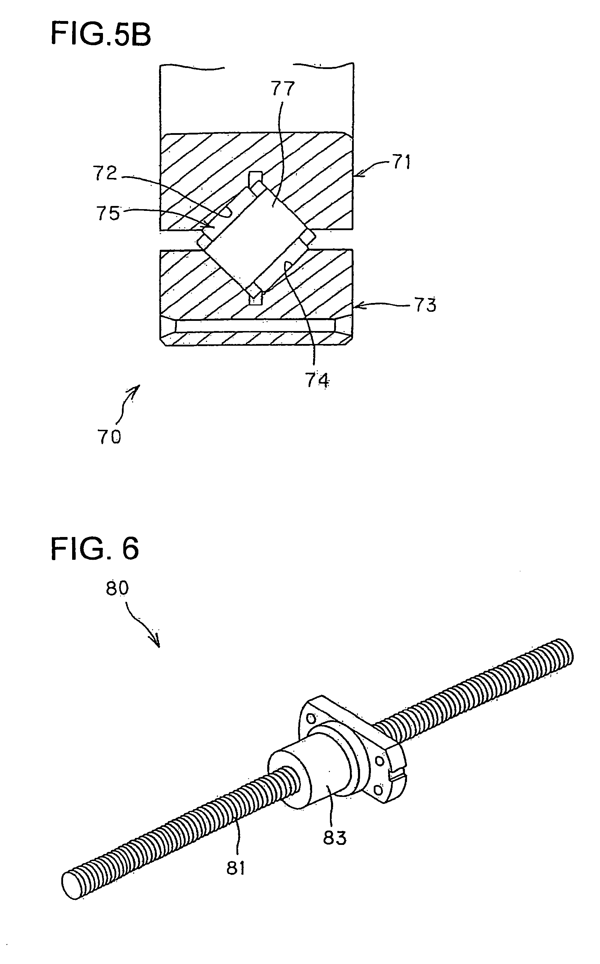

In addition, the motion guide apparatus according to the present embodiment can be configured, for example, as a rotation bearing device 70 as illustrated in FIGS. 5A and 5B. FIG. 5A is a partially longitudinal perspective view illustrating one embodiment having a configuration which uses the motion guide apparatus according to the present embodiment as a rotation bearing device. FIG. 5B is a view illustrating a longitudinal section of a rotation bearing device illustrated in FIG. 5A.

As illustrated in FIGS. 5A and 5B, the motion guide apparatus configured as a rotation bearing device 70 includes an inner ring 71 having an inner track surface 72 of V shape in cross section on an outer-periphery surface thereof as a track member or a mobile member, an outer ring 73 having an outer track surface 74 of V shape in cross section on an inner-periphery surface thereof as a mobile member or a track member, and a plurality of rolling members 77 as roller elements rollably provided in a cross manner between track paths 75 of rectangular shape in cross section formed by the inner track surface 72 and the outer track surface 74, thus causing the inner ring 71 and the outer ring 73 to make a relative rotational motion in a circumferential direction.

Formation of a constitutional member of the rotation bearing device 70 from X-ray permeable material provides an X-ray permeable spline device 60 capable of being suitably used without interfering with X-ray radiography, for example, in medical equipment performing X-ray radiography.

### [Application to Sliding Screw Device]

The respective devices above have been described with the devices in such an embodiment that the plurality of rolling members are provided between the track member and the mobile member. However, the present invention of the motion guide apparatus formed from X-ray permeable material has an applicable scope not limited to an apparatus using rolling members and can be suitable to an apparatus configured to make a relative motion in direct contact of the track member with the mobile member not through rolling members.

For example, as illustrated in FIG. 6, the present invention can be applied to a motion guide apparatus configured as a sliding screw device 80. FIG. 6 is an external perspective view illustrating one embodiment where the motion guide apparatus according to the present embodiment is configured as a sliding screw device. The sliding screw device 80 illustrated in FIG. 6 has a screw shaft 81 formed with a spiral screw groove on an outer-periphery surface thereof and a nut member 83 formed with a spiral nut groove corresponding to the screw groove on an inner-periphery surface and the nut member 83 is configured to be able to reciprocate relatively to the screw shaft 81 by relative rotational movement of the screw shaft 81 to the nut member 83.

In the sliding screw device 80 illustrated in FIG. 6, it is suitable that the screw shaft 81 is formed from X-ray permeable material made of polyoxymethylene (PQM) or carbon fiber reinforced plastics (CFRP), while the nut member 83 is formed from X-ray permeable material made of monomer cast nylon (MC nylon) or polyoxymethylene (POM). Inventors' research indicates that such combinations of X-ray permeable material are suitable, particularly for constitutional members of the sliding screw device 80. However, in the sliding screw device 80, single or combined use of X-ray permeable material made of the above-described fiber reinforced plastics (FRP), monomer cast nylon (MC nylon) or synthetic resin permits use as a constitutional member.

Preferably, the sliding screw device 80 illustrated in FIG. 6 is configured under the same conditions as for other motion guide devices. Moreover, it is suitable that X-ray permeable material having a linear absorption coefficient of 0.18 cm⁻¹ or less is used or ceramic coating is applied to sliding surfaces of the screw shaft 81 and the nut member 83.

Furthermore, it is suitable that the polyoxymethylene (POM) optimum as a constitutional material of the nut member 83 contains lubricating oil. Use of such POM containing lubricating oil provides smoother rotational motions against the screw shaft 81 of the nut member 83.

Preferable embodiments of the present invention have been described above, but technological scopes of the present invention are not limited to the scopes described in the above-described embodiments, which can be widely changed or modified.

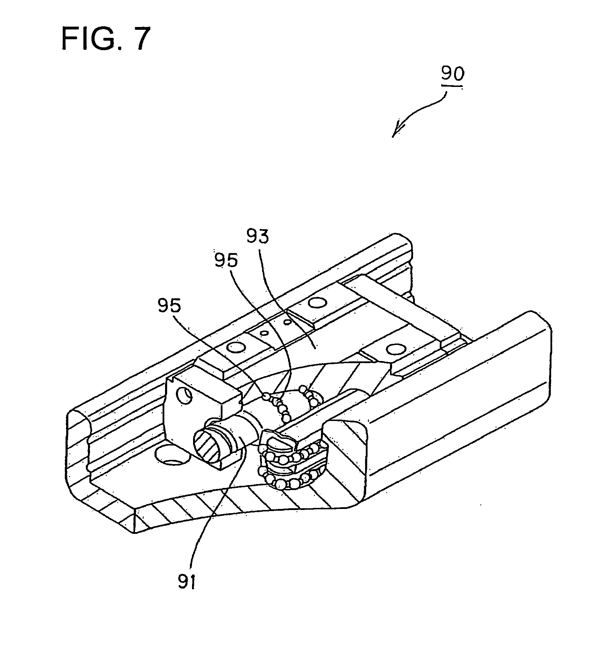

The present invention can be applied, for example, to the motion guide apparatus 90 of integrated construction formed from a combination of a linear motion guide with a ball screw, as illustrated in FIG. 7. In the motion guide apparatus 90 illustrated in FIG. 7, the screw shaft 91 and the mobile block 93 are mounted through the plurality of balls 95 ..., but both may be configured as a sliding screw not through the plurality of balls 95 .... It will be obvious from the following claims that embodiments including such changes or modifications are included in the technological scope of the present invention.

## Claims

1. A motion guide apparatus comprising:
a track member and a mobile member installed on the track member through a plurality of rolling members so as to reciprocate or rotate in an axial or circumferential direction of the track member,
wherein at least any one of the track member, the mobile member and the plurality of rolling members is made of X-ray permeable material.

2. The motion guide apparatus according to claim 1, wherein the X-ray permeable material has a linear absorption coefficient of 0.18 cm⁻¹ or less.

3. The motion guide apparatus according to claim 1 or 2, wherein ceramic coating is applied to at least areas including rolling members rolling surfaces of the track member and the mobile member loaded by the plurality of rolling members.

4. The motion guide apparatus according to any one of claims 1 to 3, wherein at least fiber reinforced plastics (FRP) is included in the X-ray permeable material.

5. The motion guide apparatus according to claim 4, wherein at least a vicinity of the rolling members rolling surface of the track member or the mobile member loaded by the plurality of rolling members is formed from the fiber reinforced plastics (FRP).

6. The motion guide apparatus according to claim 4, wherein at least a vicinity of the rolling members rolling surface of the track member or the mobile member loaded by the plurality of rolling members is formed from other material than the fiber reinforced plastics (FRP).

7. The motion guide apparatus according to claim 4, wherein the track member and the mobile member are formed from X-ray permeable material made of fiber reinforced plastics (FRP), and the plurality of rolling members are formed from X-ray permeable material made of synthetic resin.

8. The motion guide apparatus according to claim 7, wherein the synthetic resin is at least any one of polycarbonate (PC), polypropylene (PP), acrylic resin (PMMA), polyoxymethylene (POM), polyethylene (PE), polyether ether ketone (PEEK (registered trademark)), poly tetrafluoro ethylene resin (PTFE), polyvinylidene fluoride (PVDF), polyamide (PA), polyimide (PI), polyethylene terephthalate (PET) and polyethersulphone (PES).

9. The motion guide apparatus according to any one of claims 4 to 8, wherein the fiber reinforced plastic (FRP) is at least any one of carbon fiber reinforced plastic (CFRP), glass fiber reinforced plastic (GFRP) and Kevlar fiber reinforced plastic (KFRP).

10. The motion guide apparatus according to any one of claims 1 to 9, wherein the track member or the mobile member has a connecting means for connecting with a base or an object to be guided and the connecting means is a screw hole formed by fitting a helisert, an enzard or an insert made of X-ray permeable material.

11. A motion guide apparatus comprising:
a screw shaft formed with a spiral screw groove on an outer-periphery surface thereof and a nut member formed with a spiral nut groove corresponding to the screw groove on an inner-periphery surface and in which the nut member is configured to serve as a sliding screw device relatively reciprocating to the screw shaft by relative rotational movement of the screw shaft and the nut member,
wherein the screw shaft is formed from X-ray permeable material made of polyoxymethylene (POM) or carbon fiber reinforced plastic (CFRP) and the nut member is formed from X-ray permeable material made of monomer cast nylon (MC nylon) or polyoxymethylene (POM).

12. The motion guide apparatus according to claim 11, wherein the X-ray permeable material has a linear absorption coefficient of 0.18 cm⁻¹ or less.

13. The motion guide apparatus according to claim 11 or 12, wherein sliding surfaces of the screw shaft and the nut member have ceramic coating, respectively.

14. The motion guide apparatus according to any one of claims 11 to 13, wherein the polyoxymethylene (POM) contain lubricating oil.
